# EUROPEAN PATENT SPECIFICATION

(11) **EP 2 371 207 B1**
(45) Date of publication and mention of the grant of the patent: **17.10.2012**
(21) Application number: 11158774.7
(22) Date of filing: 18.03.2011
(51) Int. Cl.: A01G 13/02

(54) **Covering system for crops with improved opening and closing movements**
Bedeckungssystem für Kulturen mit verbesserten Öffnungs- und Schließbewegungen
Système de couverture de plantations avec mouvements d'ouverture et de fermeture améliorés

(30) Priority: 24.03.2010 IT MI20100486
(43) Date of publication of application: 05.10.2011
(73) Proprietor: Valente S.p.A., 35011 Campodarsego (PD) (IT)
(72) Inventor: Valente, Alberto, 35011 Campodarsego (PD) (IT)
(74) Representative: Martegani, Franco

(56) References cited:
- EP-A1- 1 618 782
- US-A- 4 296 568

## Description

### DESCRIPTION

The present invention relates to a covering system for crops having improved opening and closing movements.

The field of the invention is that of covering systems for crops in general (orchards, vineyards and the like), having the function of protecting them both from weather conditions (rain, hail, wind, sunlight) and from the attack of insects or the like.

The covering systems to which the invention relates comprise protective or covering elements (nets, fabrics and the like), extended above the crops by means of supporting piles distributed in rows. The covering element is also installed on each row of these supporting piles, with lateral wings destined to close on the corresponding lateral wings of contiguous rows. In use, these covering elements operate between an extended or open protective position and a retracted or closed inoperative position.

Currently, handling of these covering systems between the aforesaid operating and inoperative positions is carried out manually, or with the aid of mechanisms which, however, only perform opening or only perform closing, but not both of these operations. Consequently, the aforesaid prior art systems have the disadvantage of requiring a manual operation, to be carried out at the height of the covering element in the operating position, with the aid of ladders and the like, along the whole length of the row, which may even stretch for several hundreds of metres.

A further disadvantage of prior art is represented by the fact that after removing the ties that hold current covering systems closed in the inoperative position, these covering systems tend to drop down along the body of the piles and rest on top of the branches of the crop below. Consequently, in order to extend the covering element, the operator must first free this latter from the branches in which it is caught up (with the risk of damaging it), and then raise it into the final operating position. Due to these difficulties, conventional covering systems are not normally handled more than once a year, thereby placing crops at risk of damage caused by unseasonable weather or shading for excessively long periods of time.

The publication WO-A-95/25424 relates to a protective canopy for crops, including a barrier fabric maintained above a supporting pile and twisting thereon by means of suitable control cables, in order to pass from a fully expanded configuration to a contracted configuration in the direction of the row of the trees.

EP-A-1 618 782 discloses a covering system for crops having a plurality of pulling wires acting between the lateral edges of the covering element and the piles of the row, different from the head piles.

The main object of the present invention is to provide a covering system for crops in general which, unlike systems of the prior art, offers improved opening and closing movements, both in terms of the ease and in terms of the speed with which these operations are carried out.

A further object of the invention is to provide a covering system of the aforesaid type suitable to prevent, during passage from the retracted or closed inoperative condition to the extended or open operating condition, it from falling onto the crops and requiring to be raised by hand in order to be placed in the operating position.

These and other objects are achieved with the covering system of claim 1. Preferred embodiments of the invention are indicated in the subsequent claims.

Compared to conventional covering systems, the covering system of the invention offers the advantage of simplifying and speeding up both the operations of installation of the system and of placing it in inoperative condition. In particular, due to its ease of use, the covering system of the invention can be opened and closed several times a year, according to specific needs.

A further important advantage of the invention is represented by the fact that from the start the covering system is in its position raised above the crops. In this way, it is no longer necessary to handle the covering system manually in order to place it in the operating position, in order to raise it above the crops.

The covering system of the invention also has the advantage of being adaptable to any preinstalled and conventional type of covering system, in order to transform it rapidly and simply to obtain the advantages of the present invention.

These and other objects, advantages and characteristics will be apparent from the description that follows of some preferred embodiments of the covering system of the invention, shown by way of nonlimiting examples in the figures of the accompanying tables, wherein:
- Fig. 1 shows the covering system of the invention, in its open using position;
- Figs. 2 and 3 show the covering system of Fig. 1 in correspondence of the head piles of a row of piles;
- Fig. 4 shows the covering system of Fig. 1, with view of the system of longitudinal pulling ropes and of transverse pulling wires;
- Fig. 5 shows a detail of the connection of the pulling wires of Fig. 4 on the respective supporting ring;
- Fig. 6 shows a detail of the coupling of the pulling wires on the ring of Fig. 5;

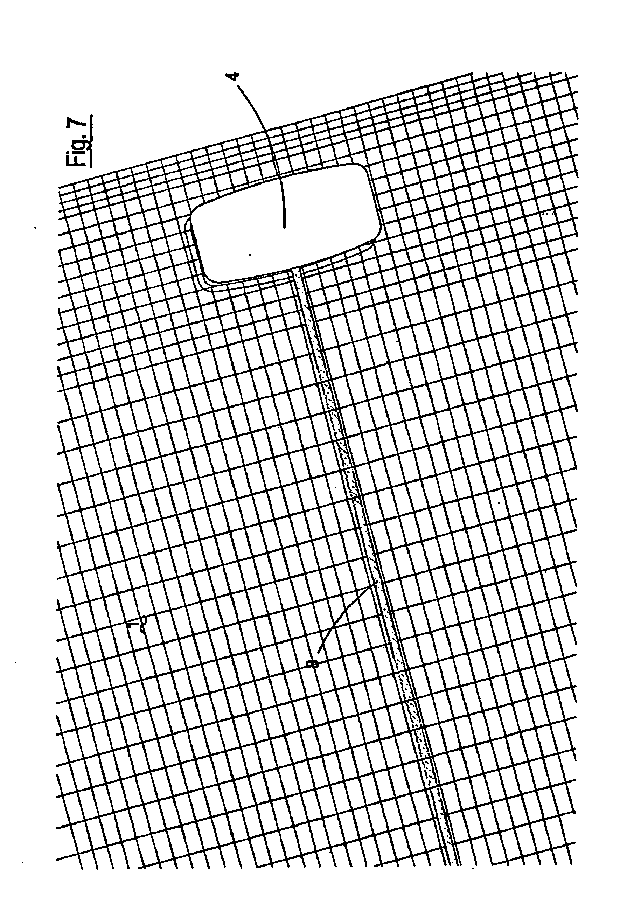

- Fig. 7 shows a detail of attachment of the transverse pulling wires on the lateral wing of the covering element;
- Fig. 8 shows a detail of the relative fastening between the transverse pulling wires and the longitudinal pulling rope;

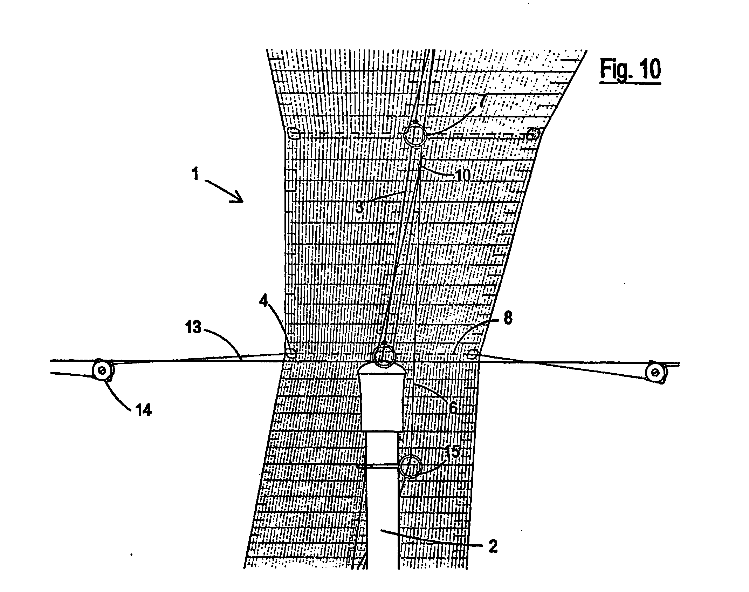

- Figs. 9 and 10 show some handling steps of the covering system of the preceding figures;

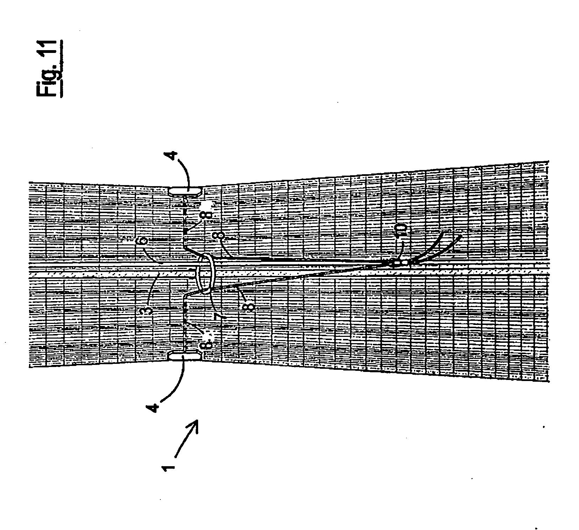

- Fig. 11 shows a detail of the covering system of the invention, in the gathered inoperative position;

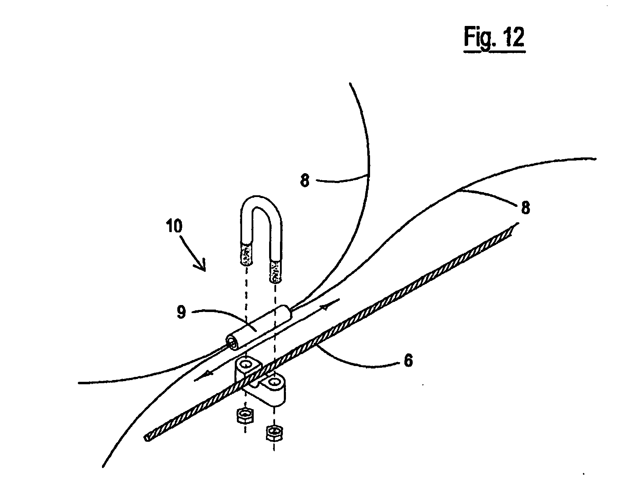

- Fig. 12 shows a detail of the solution of sliding attachment of the transverse pulling wires on the longitudinal pulling rope of the covering system of the preceding figures;
- Figs. 13 and 14 show in plan view the covering system of Fig. 1, respectively in the operating and in the inoperative positions; and
- Figs. 15 and 16 show in plan view a variant of the covering system of the invention, respectively in the operating and in the partly folded positions.

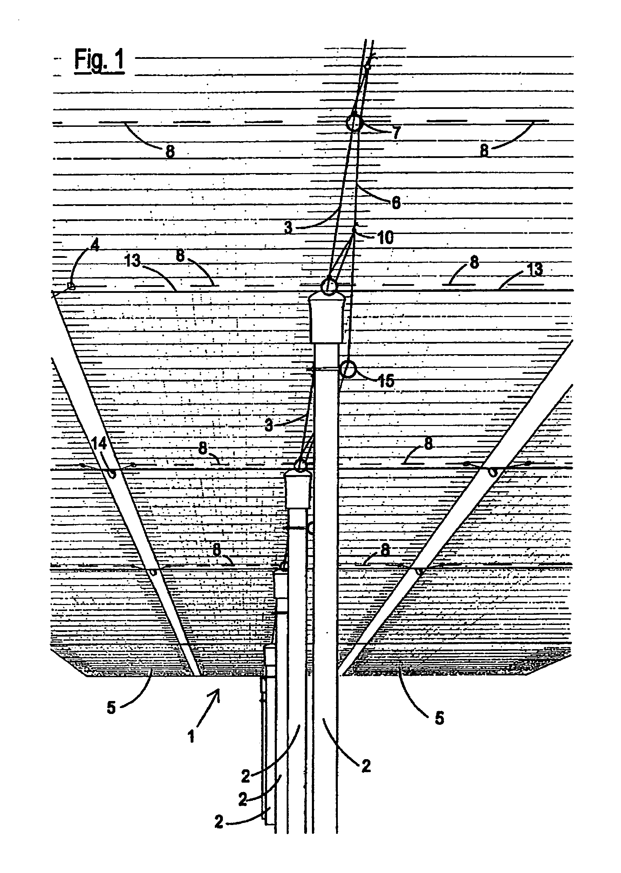

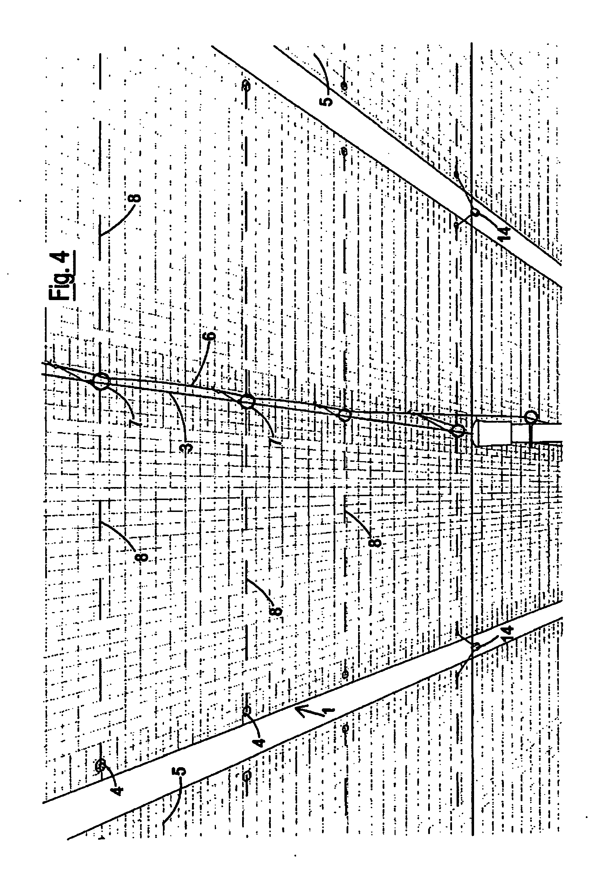

The covering system of the invention, as shown in Fig. 1, comprises a covering element 1 supported above a plurality of piles 2 which form the row of piles. In the example shown, the element 1 is constituted by a hail net, but it could also be formed by nets of other type (shade nets, aphid nets, bird nets, etc...), by rain protection fabrics, or other protective devices in general. The net 1 is supported, above the row formed by the piles 2, by means of a ridge wire 3 (Fig. 4) and, laterally, by means of suitable devices 4 for hooking to the nets 5 of contiguous rows of piles.

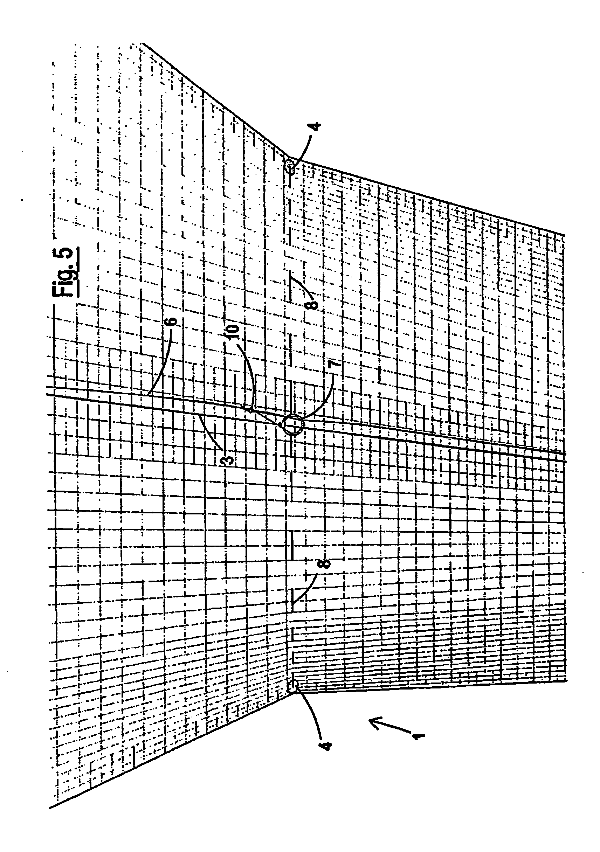

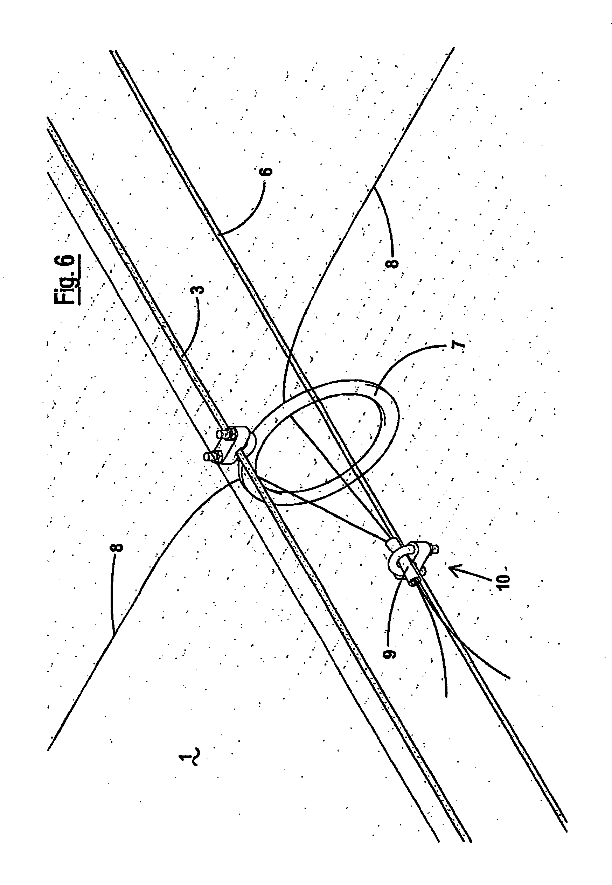

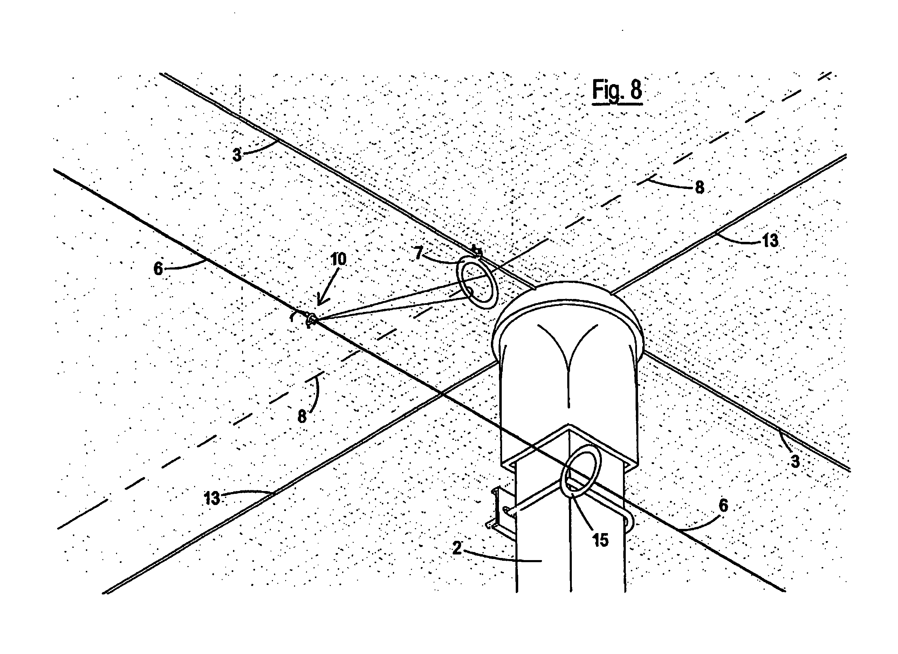

According to the invention, the covering system is integrated with a longitudinal pulling rope 6, which slides in correspondence of the ridge wire 3 and is joined thereto by means of guides in the form of rings 7 (Figs. 1 and 4 to 6). Preferably, and as better shown in Fig. 8, in correspondence of the piles 2, the pulling rope 6 is supporting sliding inside rings 15, in turn fastened to the body of these piles 2.

The covering system of the invention also comprises a plurality of transverse pulling wires 8 which, in correspondence of the rows of piles, are fastened to the longitudinal pulling rope 6, while on the lateral edges of the net 1 are fastened thereto by means of said hooking systems 4.

In particular, attachment between the longitudinal pulling rope 6 and the transverse pulling wires 8 is obtained by means of an adjustable positioning system, which comprises a sleeve 9 for fastening of the transverse pulling wires 8, in turn clamped in variable position to the longitudinal pulling rope 6 by means of a suitable clamp 10. Preferably, the sleeve 9 is made of deformable metal material, to allow crimping thereof to the wires 8. Moreover, the clamp 10 could be produced in once piece with said sleeve 9, to reduce the overall dimensions of the system.

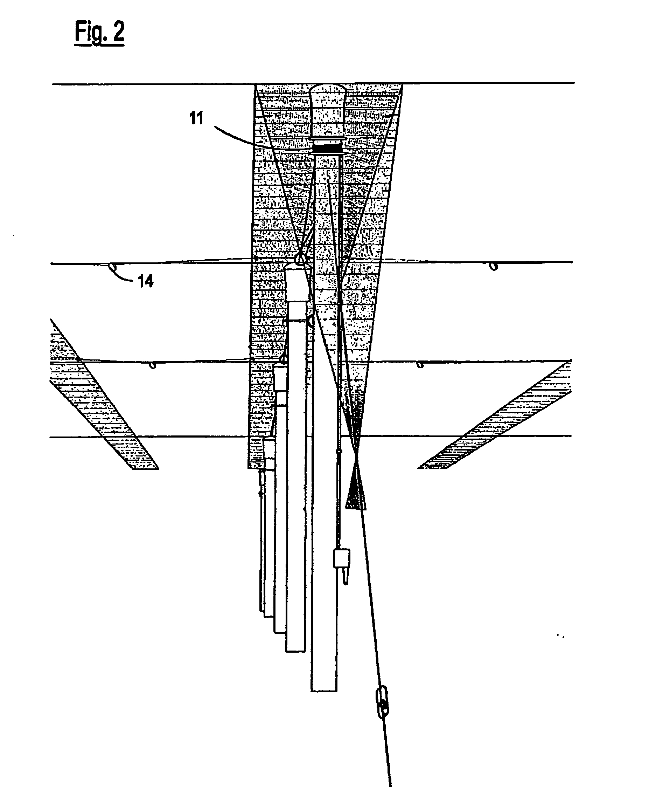

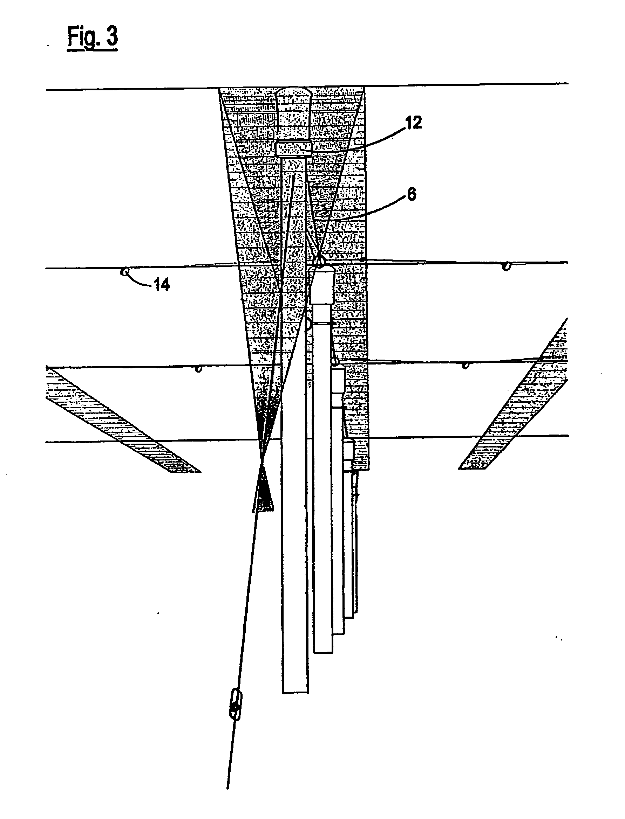

As can be seen in Figs. 2 and 3, the head piles of the row of piles are equipped with a return device. In the example, a manually or motor operated drum 11 is provided in correspondence of one head pile, to generate winding and unwinding of the longitudinal pulling rope 6, while a winding device 12, or other tensioning device of the rope 6 with respect to the drum 11, is arranged on the other head pile. In some particular cases, such as rows of piles of considerable length, the winding device 12 could also be mounted on an intermediate pile of the row of piles.

Moreover, the covering system is completed by transverse supporting ropes 13 placed at the height of each pile 2 of the row of piles, said ropes supporting, in correspondence of the joins of the lateral edges of nets 1 and 5 of contiguous rows of piles, elastic return means, for example spring pulleys 14 with independent action on the covering elements of contiguous rows of piles.

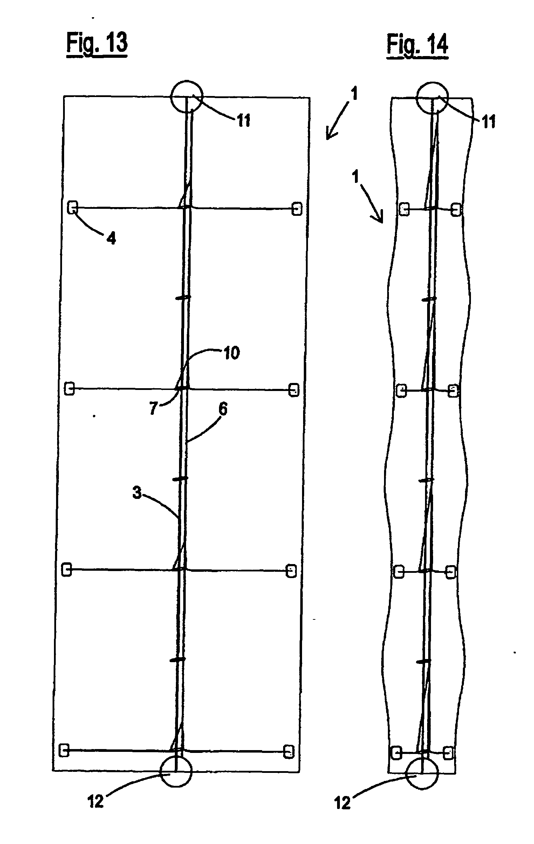

In use, starting from the operating position, i.e. the open or extended position of the net 5 of the covering system of the invention (Fig. 13), acting on the drum 11 generates return of the longitudinal pulling rope 6 by the winding device 12, causing it to slide through the respective supporting rings 7. The movement of the rope 6 is then transmitted to the transverse pulling wires 8, fastened reciprocally in correspondence of the clamps 10. As they are hooked to the respective system 4 also at the height of the lateral edges of the net 1, these same wires 6 return the net toward the row of piles, closing the covering element above the piles 2 (Fig. 14). On the contrary, with opposed movements the covering element is extended or opened, from the inoperative to the operating position.

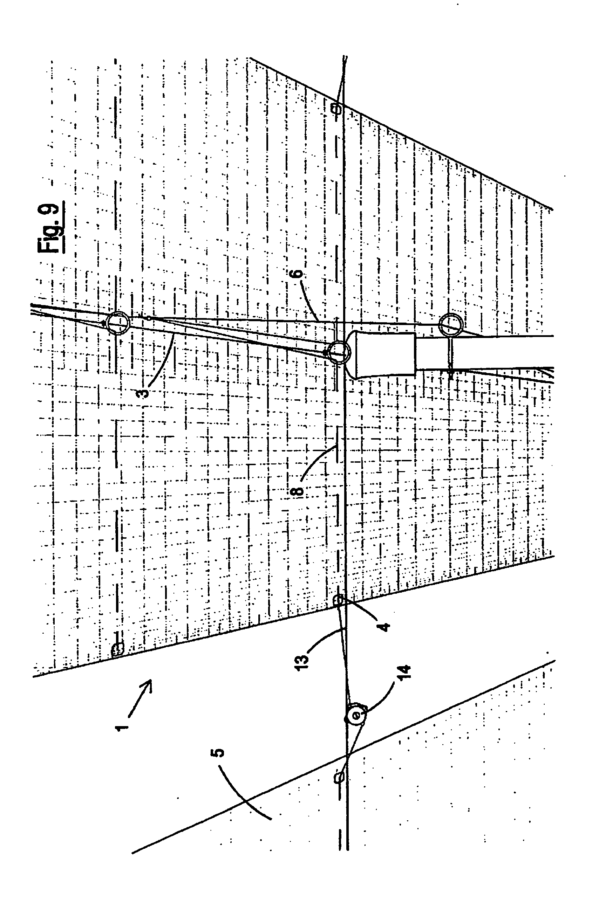

In particular, as is more apparent in Fig. 9, both during closing of the nets 1 and 5, and during extension of the covering element into the operating position, this is maintained in a raised position by means of lateral tensioning devices, the spring pulleys 14 in the example, preventing the nets from falling on top of the crops during handling thereof.

Modifications can be made to the invention as described above and shown in the accompanying figures, to produce variants which nonetheless fall within the scope of the appended claims.

Therefore, by way of example, the transverse pulling wires 8 could be directly formed by a corresponding weft wire of the nets 1 and 5, or by an auxiliary wire woven, sewn or otherwise fastened in a sliding way to the covering element.

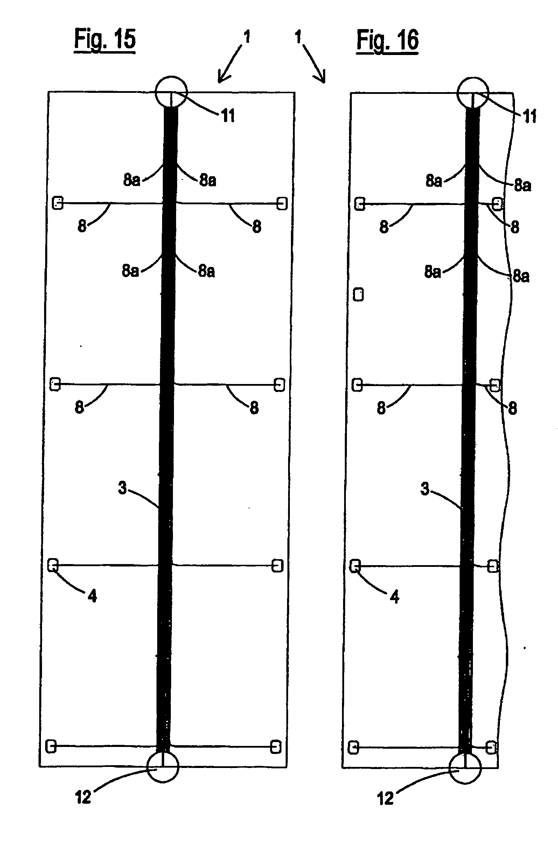

Moreover, the longitudinal pulling rope 6 could be substituted by longitudinal branches 8a of the transverse pulling wires 8, returned directly toward the drum 11 (Fig. 15). In this case, said pulling wires 8 act between at least one of the lateral edges of the net 1 and at least one head pile of the row of piles, with ring 7 as return element. Moreover, extension or opening of the net 1 could be obtained, according to this latter variant, selectively on only one or on both sides thereof (Fig. 16).

As further variant, the transverse pulling wires 8 could be integrated within a device capable of operating between a rigid and an elastic condition, better known as *"Kulikov antenna*", equipped with an articulated spring which operates between a taut operating condition and an inoperative condition obtained with an elastic return device.

## Claims

1. A covering system for crops In general, comprising at least one covering element (1,5) supported by at least one row of piles (2), **characterized in that** said covering system is provided with a plurality of transverse pulling wires (8) acting between at least one of the lateral edges of said covering element (1,5) and at least one head pile of said row of piles, in order to cause the said covering element (1,5) is opened and closed in the transverse direction compared with said row of piles (2), said system further including a longitudinal pulling rope (6) equipped with devices (9,10) for hooking to said transverse pulling wires (8), a ridge wire (3) to longitudinally support said covering element (1,5) above the piles (2), and a plurality of guides (7) to slidingly support said longitudinal pulling rope (6), with said transverse pulling wires (8) fastened thereto, and lateral tensioning devices (14) suitable to generate the extending or opening movement of the covering element in its operating position.

2. The covering system according to claim 1, **characterized In that** it is also provided with rings (15), fastened to the body of said piles (2) to support said pulling rope (6) in correspondence of said piles.

3. The covering system according to claim 2, **characterized in that** it also comprises a return device (11) for said transverse pulling wires (8).

4. The covering system according to one of claims 1 to 3, **characterized In that** said device (11) is of the type suitable to return said longitudinal pulling rope (6), a tensioning device (12) for return of said rope (6) being provided on the head pile of the row of piles opposite the one carrying said device (11), or alternatively on an intermediate pile of said row of piles.

5. The covering system according to claim 4, **characterized In that** said lateral tensioning devices (14) are constituted by spring pulleys supported on a respective transverse support rope (13) of the row of plies. and with independent action on the covering elements of contiguous rows of piles.

6. The covering system according to claim 1, **characterized in that** said devices for fastening of the rope (6) to the wires (8) comprise a clamping element (9) for said wires (8) fastened In adjustable position to the longitudinal pulling rope (6) by means of a suitable supporting element (10).

7. The covering system according to claim 1, **characterized In that** said longitudinal pulling rope (6) is substituted by longitudinal branches (8a) of said transverse pulling wires (8), these latter acting between at least one of the lateral edges of the net (1) and at least one head pile of the row of piles, with a ring (7) as return element.

8. The covering system according to claim 1, **characterized in that** said transverse pulling wires (8) are directly formed by corresponding weft wires of said covering element (1,5), or by auxiliary wires woven, sewn or otherwise fastened in a sliding way to said covering element (1,5).

9. The covering system according to claim 1, **characterized in that** said transverse pulling wires (8) are integrated within a *"kulikov antenna"* equipped with a return spring.

## Patentansprüche

1. Abdecksystem für Kulturen allgemein, mit zumindest einem Abdeckelement (1, 5), das durch zumindest eine Reihe von Stangen (2) getragen ist,
**dadurch gekennzeichnet, dass** das Abdecksystem mit einer Mehrzahl von quergerichteten Zugdrähten (8) versehen ist, die zwischen zumindest einem der seitlichen Ränder des Abdeckelements (1, 5) und zumindest einer Kopfstange der Reihe von Stangen wirken, um zu bewirken, dass das Abdeckelement (1, 5) in der Querrichtung im Vergleich zu der Reihe von Stangen (2) geöffnet und geschlossen wird, wobei das System ferner ein längsgerichtetes Zugseil (6), das mit Vorrichtungen (9, 10) zum Verhaken an die quergerichteten Zugdrähte (8) ausgestattet ist, einen Firstdraht (3), der das Abdeckelement (1, 5) über den Stangen (2) längs trägt, und eine Mehrzahl von Führungen (7) aufweist, die das längsgerichtete Zugseil (6) verschiebbar tragen, wobei die quergerichteten Zugdrähte (8), die daran befestigt sind, und seitliche Spannvorrichtungen (14) dazu geeignet sind, die Ausfahr- oder Öffnungsbewegung des Abdeckelements in seiner Betriebsposition zu erzeugen.

2. Abdecksystem nach Anspruch 1,
**dadurch gekennzeichnet, dass** es auch mit Ringen (15) versehen ist, die an dem Körper der Stangen (2) befestigt sind, um das Zugseil (6) entsprechend den Stangen zu tragen.

3. Abdecksystem nach Anspruch 2,
**dadurch gekennzeichnet, dass** es auch eine Rückführvorrichtung (11) für die quergerichteten Zugdrähte (8) umfasst.

4. Abdecksystem nach einem der Ansprüche 1 bis 3,
**dadurch gekennzeichnet, dass** die Vorrichtung (11) von dem Typ ist, der dazu geeignet ist, das längsgerichtete Zugseil (6) rückzuführen, wobei eine Spannvorrichtung (12) zum Rückführen des Seils (6) an der Kopfstange der Reihe von Stangen gegenüberliegend der, die die Vorrichtung (11) trägt, oder alternativ an einer dazwischenliegenden Stange der Reihe von Stangen vorgesehen ist.

5. Abdecksystem nach Anspruch 4,
**dadurch gekennzeichnet, dass** die seitlichen Spannvorrichtungen (14) durch Federriemenscheiben gebildet sind, die an einem jeweiligen quergerichteten Trageseil (13) der Reihe von Stangen und mit unabhängiger Wirkung auf die Abdeckelemente der kontinuierlichen Reihen von Stangen getragen sind.

6. Abdecksystem nach Anspruch 1,
**dadurch gekennzeichnet, dass** die Vorrichtungen zum Befestigen des Seils (6) an den Drähten (8) ein Klemmelement (9) für die Drähte (8) umfassen, das in einstellbarer Position zu dem längsgerichteten Zugseil (6) mittels eines geeigneten Trageelements (10) befestigt ist.

7. Abdecksystem nach Anspruch 1,
**dadurch gekennzeichnet, dass** das längsgerichtete Zugseil (6) durch Längsverzweigungen (8a) der quergerichteten Zugdrähte (8) ersetzt ist, wobei diese zwischen zumindest einem der seitlichen Ränder des Netzes (1) und zumindest einer Kopfstange der Reihe von Stangen mit einem Ring (7) als Rückführelement wirken.

8. Abdecksystem nach Anspruch 1,
**dadurch gekennzeichnet, dass** die quergerichteten Zugdrähte (8) durch entsprechende Schussdrähte des Abdeckelements (1,5) oder durch zusätzliche Drähte direkt geformt sind, die auf eine gleitende Weise mit dem Abdeckelement (1, 5) verwoben, vernäht oder anderweitig befestigt sind.

9. Abdecksystem nach Anspruch 1,
**dadurch gekennzeichnet, dass** die quergerichteten Zugdrähte (8) in eine "Kulikov-Antenne" integriert sind, die mit einer Rückstellfeder ausgestattet ist.

## Revendications

1. Système de couverture de plantations en général, comprenant au moins un élément de couverture (1, 5) supporté par au moins une rangée de poteaux (2), **caractérisé en ce que** ledit système de couverture est muni d'une pluralité de fils de traction transversaux (8) agissant entre au moins l'un des bords latéraux dudit élément de couverture (1, 5) et au moins un poteau de tête de ladite rangée de poteaux, afin de provoquer l'ouverture et la fermeture dudit élément de couverture (1, 5) dans la direction transversale par rapport à ladite rangée de poteaux (2), ledit système comprenant en outre un câble de traction longitudinal (6) équipé de dispositifs (9, 10) permettant de l'accrocher auxdits fils de traction transversaux (8), un fil de faîte (3) pour supporter ledit élément de couverture (1, 5) dans le sens longitudinal au-dessus des poteaux (2), et une pluralité de guides (7) pour supporter de façon coulissante ledit câble de traction longitudinal (6), lesdits fils de traction transversaux (8) étant fixés à celui-ci, et des dispositifs tendeurs latéraux (14) adaptés pour produire le mouvement de déploiement ou d'ouverture de l'élément de couverture dans sa position de fonctionnement.

2. Système de couverture selon la revendication 1, **caractérisé en ce qu'**il est également équipé d'anneaux (15) fixés au corps desdits poteaux (2) pour supporter ledit câble de traction (6) au niveau desdits poteaux.

3. Système de couverture selon la revendication 2, **caractérisé en ce qu'**il comprend également un dispositif de retour (11) pour lesdits fils de traction transversaux (8).

4. Système de couverture selon l'une quelconque des revendications 1 à 3, **caractérisé en ce que** ledit dispositif (11) est du type adapté pour faire revenir ledit câble de traction longitudinal (6), un dispositif tendeur (12) pour le retour dudit câble (6) étant prévu sur le poteau de tête de la rangée de poteaux opposé à celui supportant ledit dispositif (11), ou selon une autre possibilité sur un poteau intermédiaire de ladite rangée de poteaux.

5. Système de couverture selon la revendication 4, **caractérisé en ce que** lesdits dispositifs tendeurs latéraux (14) sont constitués de poulies à ressort supportées sur un câble de support transversal respectif (13) de la rangée de poteaux, et avec une action indépendante sur les éléments de couverture de rangées contiguës de poteaux.

6. Système de couverture selon la revendication 1, **caractérisé en ce que** lesdits dispositifs pour la fixation du câble (6) aux fils (8) comprennent un élément de serrage (9) pour lesdits fils (8) fixé en position réglable au câble de traction longitudinal (6) au moyen d'un élément de support approprié (10).

7. Système de couverture selon la revendication 1, **caractérisé en ce que** ledit câble de traction longitudinal (6) est remplacé par des éléments d'embranchement longitudinaux (8a) desdits fils de traction transversaux (8), ces derniers agissant entre au moins l'un des bords latéraux du filet (1) et au moins un poteau de tête de la rangée de poteaux, avec un anneau (7) comme élément de retour.

8. Système de couverture selon la revendication 1, **caractérisé en ce que** lesdits fils de traction transversaux (8) sont directement formés par des fils de trame correspondants dudit élément de couverture (1, 5), ou par des fils supplémentaires tissés, cousus ou fixés d'une autre manière de façon coulissante audit élément de couverture (1,5).

9. Système de couverture selon la revendication 1, **caractérisé en ce que** lesdits fils de traction transversaux (8) sont intégrés à l'intérieur d'une « antenne Kulikov » équipée d'un ressort de rappel
